# EUROPEAN PATENT APPLICATION

(11) **EP 3 770 380 A1**
(43) Date of publication of application: **27.01.2021**
(21) Application number: 20182862.1
(22) Date of filing: 29.06.2020
(51) Int. Cl.: F01D 9/04, F01D 11/02, F01D 25/24

(54) **CERAMIC MATRIX COMPOSITE VANE SET WITH PLATFORM LINKGAGE**

(30) Priority: 26.07.2019 US 201916523229
(71) Applicant: Rolls-Royce plc, London N1 9FX (GB)
(72) Inventor: Wong, Alexander, Derby, Derbyshire DE24 8BJ (GB); Whittle, Michael, Derby, Derbyshire DE24 8BJ (GB)
(74) Representative: Rolls-Royce plc

(57) **Abstract**

An airfoil assembly (10) adapted for use in a gas turbine engine (110) includes a ceramic matrix composite airfoil (30) configured to interact with hot gases flowing through the gas turbine engine (110) along a gas path (24), a metallic support strut (14) that extends radially through the airfoil (30) to support the airfoil (30), and a metallic inner carrier (16) coupled with the support strut (14). The inner carrier (16) includes a body (50), a tab (52) and a void (54) configured to reduce twisting of the airfoil assembly.

## Description

### Field of the disclosure

The present disclosure relates generally to airfoil assemblies for gas turbine engines, and more specifically to airfoils that comprise ceramic materials.

### Background

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

Products of the combustion reaction directed into the turbine are conducted toward airfoils included in stationary vanes and rotating blades of the turbine. The airfoils are often made from high-temperature resistant materials and/or are actively cooled by supplying relatively cool air to the vanes and blades due to the high temperatures of the combustion products. To this end, some airfoils for vanes and blades are incorporating composite materials adapted to withstand very high temperatures. Design and manufacture of vanes and blades from composite materials presents challenges because of the geometry and strength desired for the parts.

### Summary

The present disclosure provides an airfoil assembly and a gas turbine engine as set out in the appended claims.

The present disclosure may comprise one or more of the following features and combinations thereof.

An airfoil assembly for a gas turbine engine may include a ceramic matrix composite vane, a metallic support strut, and a metallic inner carrier. The ceramic matrix composite vane is adapted to interact with hot gases flowing around the airfoil assembly during use of the airfoil assembly. The ceramic matrix composite vane may include an outer platform that defines an outer boundary of a gas path, an inner platform spaced apart radially from the outer platform relative to an axis to define an inner boundary of the gas path, and an airfoil that extends radially between and interconnects the outer platform and the inner platform. The airfoil may be formed to define an interior cavity that extends radially through the airfoil. The metallic support strut may be located in the interior cavity formed in the airfoil. The metallic support strut may be configured to receive force loads applied to the ceramic matrix composite vane by the hot gases during use of the airfoil assembly.

The metallic inner carrier may be coupled with the metallic support strut and adapted to block the hot gases from flowing radially inward toward the axis. The metallic inner carrier may include a body, a tab, and a void. The body extends axially and circumferentially relative to the axis. The tab extends circumferentially away from a first end of the body and may be configured to be received in an adjacent metallic inner carrier and the void extends circumferentially into a second end of the body and may be configured to receive a portion of another adjacent metallic inner carrier to interlock the airfoil assembly with the adjacent metallic inner carriers to reduce twisting of the airfoil assembly during use of the airfoil assembly.

The present disclosure provides features to reduce the rotation of ceramic matrix composite airfoil units caused by aerodynamic loading. The reduction in rotation may be leveraged to reduce secondary air system leakages and improve engine performance.

The metallic inner carrier is coupled with the metallic support strut to transmit additional force loads to the metallic support strut to block the hot gases from flowing radially inwardly beyond the airfoil assembly.

The metallic inner carrier of each airfoil unit interlocks with circumferentially adjacent airfoil units to reduce the rotation of the metallic inner carriers caused by aerodynamic loading. By each inner carrier engaging the inner carrier of adjacent airfoil units, the reaction between the airfoil units may act in the opposite direction to the circumferential aerodynamic load and may reduce the net loading and net deflection of each of the inner carriers.

The present disclosure introduces a mechanical linkage which may reduce rotation of the structure. By engaging the adjacent part, the reaction may act in the opposite direction to the circumferential aerodynamic load and may reduce the net loading and net deflection of every part.

In some embodiments, the body has an outer surface and an inner surface spaced apart radially from the outer surface. The tab may be spaced apart radially from at least one of the outer surface and the inner surface.

In some embodiments, the body may have a fore surface and an aft surface spaced apart axially from the fore surface. The tab may be spaced apart axially from the aft surface.

According to another aspect of the present disclosure, an airfoil assembly for a gas turbine engine may include an airfoil, a support strut, and an inner carrier. The support strut may extend radially into the airfoil relative to an axis. The inner carrier may be coupled with the support strut to locate the inner carrier radially between the airfoil and the axis. The inner carrier may include a body, a tab that extends circumferentially away from the body, and a void that extends circumferentially into the body.

In some embodiments, the body has an outer surface and an inner surface spaced apart radially form the outer surface. The tab may be spaced apart radially from at least one of the outer surface and the inner surface. In some embodiments, the tab may be spaced apart radially from both the outer surface and the inner surface.

In some embodiments, the body has an outer surface and an inner surface spaced apart radially from the outer surface. The tab may be flush radially with at least one of the outer surface and the inner surface.

In some embodiments, the tab may be flush with one of the outer surface and the inner surface. The tab may be spaced apart radially from the other of the outer surface and the inner surface.

In some embodiments, the body includes a fore surface and an aft surface spaced apart axially from the fore surface. A surface of the tab may be flush with the fore surface. The void may extend axially into the fore surface partway into the body.

In some embodiments, the body may be formed to further include a seal slot that extends circumferentially into the body. In some embodiments, the tab includes a curvilinear surface.

According to another aspect of the present disclosure, an airfoil assembly for a gas turbine engine includes a first airfoil unit and a second airfoil unit. The first airfoil unit may include includes a first airfoil, a first support strut that extends radially into the first airfoil relative to an axis, and a first inner carrier coupled with the first support strut to locate the first inner carrier radially inward of the first airfoil. The second airfoil unit may be located circumferentially adjacent the first airfoil unit relative to the axis. The second airfoil unit may include a second airfoil, a second support strut that extends radially into the second airfoil, and a second inner carrier coupled with the second support strut to locate the second inner carrier radially inward of the second airfoil. The first inner carrier may be interlocked with the second inner carrier.

In some embodiments, the first inner carrier may include a first body, a first tab, and a first void. The first tab may extend circumferentially away from the first body. The first void may extend circumferentially into the first body.

In some embodiments, the second inner carrier includes a second body, a second tab, and a second void. The second tab may extend circumferentially away from the second body and into the first void. The second void may extend circumferentially into the second body. In some embodiments, at least one surface of the first tab may be curvilinear.

In some embodiments, the first body may include a fore face and an aft face spaced apart axially from the first face. The first tab may extend flush with one of the fore face and the aft face. The first tab may be spaced apart axially from the other of the fore face and the aft face.

In some embodiments, the first airfoil unit may include a first vane that includes the first airfoil, a first outer platform coupled with the first airfoil, and a first inner platform coupled with the first airfoil. The first inner platform may be located radially between the first outer platform and the first inner carrier.

In some embodiments, the second airfoil unit includes a second vane that includes the second airfoil, a second outer platform coupled with the second airfoil, and a second inner platform coupled with the second airfoil. The second inner platform may be located radially between the second outer platform and the second inner carrier. The first inner platform may extend circumferentially into the second inner platform to interlock the first inner platform with the second inner platform.

In some embodiments, the second airfoil unit may include a second vane that includes the second airfoil, a second outer platform coupled with the second airfoil, and a second inner platform coupled with the second airfoil. The second inner platform may be located radially between the second outer platform and the second inner carrier. The first outer platform may extend circumferentially into the second outer platform to interlock the first outer platform with the second outer platform. In some embodiments, the first inner carrier and the second inner carrier may overlap when viewed axially.

According to another aspect of the present disclosure, a gas turbine engine includes the airfoil assembly of the above aspects.

These and other features of the present disclosure will become more apparent from the following description of the illustrative embodiments.

### Brief description of the drawings

**Fig. 1** is a cutaway view of a gas turbine engine that includes a fan, a compressor, a combustor, and a turbine, the turbine including static turbine vane rings configured to direct air into adjacent rotating turbine wheel assemblies;
**Fig. 2** is a perspective view of a turbine vane assembly included in one of the turbine vane rings of Fig. 1 showing that the turbine vane assembly includes a plurality of airfoil units, each having a vane adapted to interact with hot gases, a support strut located within the vane, and an inner carrier coupled with the support strut and configured to interlock with adjacent airfoil units to reduce twisting of the turbine vane assembly caused by the hot gases being applied to the vane;
**Fig. 3** is an exploded view of an airfoil unit of Fig. 2 showing that the airfoil unit includes the vane having an airfoil, an outer platform, and an inner platform, the support strut located within the vane to receive force loads from the vane, and the inner carrier coupled with the support strut to reduce the magnitude of the force loads applied to the vane;
**Fig. 4** is a section view of the turbine vane assembly of Fig. 2 looking radially inward to show that adjacent inner carriers interlock with one another to reduce twisting of the turbine vane assemblies;
**Fig. 5** is a section view of a turbine vane assembly showing another pattern for interlocking adjacent inner carriers;
**Fig. 6** is a section view of a turbine vane assembly showing another pattern for interlocking adjacent inner carriers;
**Fig. 7** is a section view of an inner carrier of an airfoil assembly showing that adjacent inner carriers interlock to overlap in a radial direction;
**Fig. 8** is a section view of an inner carrier of an airfoil assembly showing adjacent inner carriers interlocked in a radial direction and that the airfoil assembly includes a strip seal between airfoil units;
**Fig. 9** is a perspective view of another inner carrier showing that the inner carrier is configured to overlap with a neighboring inner carrier both axially and radially; and
**Fig. 10** is a perspective view of another airfoil assembly showing that the outer platform, the inner platform, and the inner carrier of each airfoil unit interlock with the corresponding outer platform, inner platform, and inner carrier of a neighboring airfoil unit.

### Detailed description

For the purposes of promoting an understanding of the principles of the disclosure, reference will now be made to a number of illustrative embodiments illustrated in the drawings and specific language will be used to describe the same.

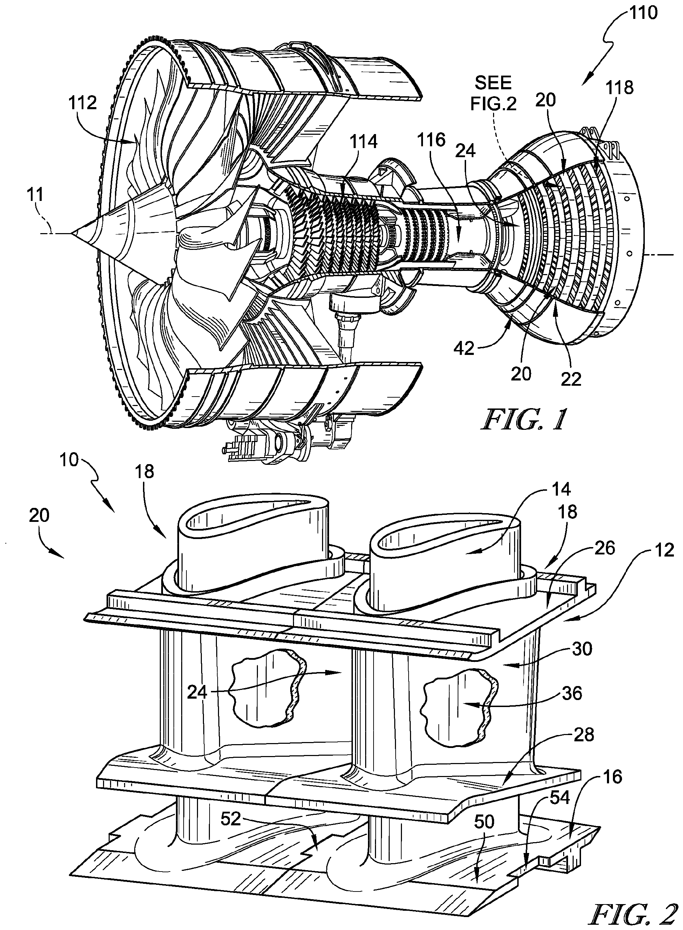

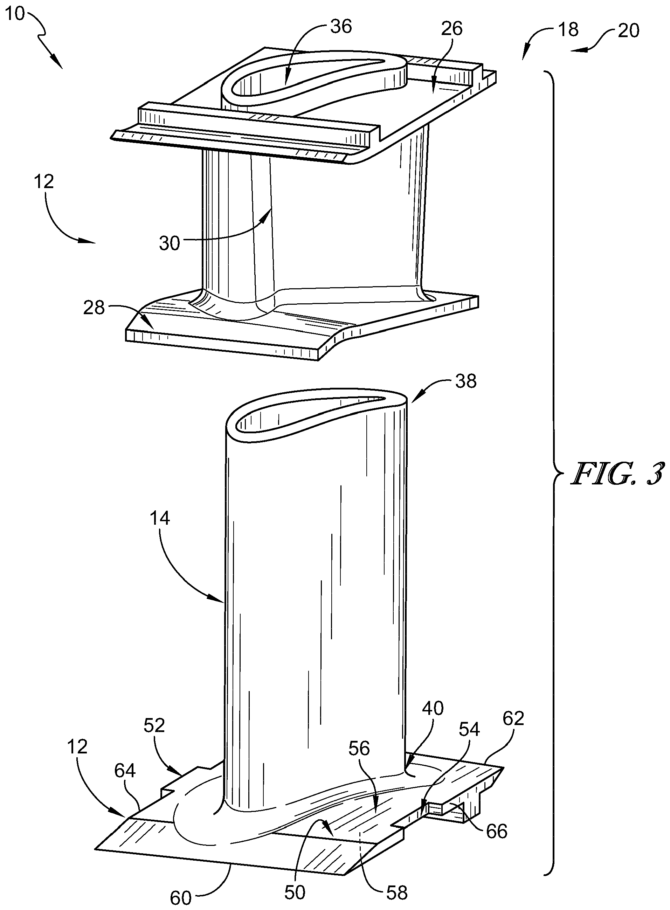

An airfoil assembly 10 is shown in Fig. 2 and is adapted for use in a gas turbine engine 110 shown in Fig. 1. The illustrative airfoil assembly 10 includes a plurality of airfoil units 18 that interlock with one another to reduce twisting of the airfoil units 18 during operation of the gas turbine engine 110 as suggested in Fig. 2. Each airfoil unit 18 includes a ceramic matrix composite vane 12, a metallic support strut 14, and a metallic inner carrier 16 as shown in Figs. 2 and 3.

The ceramic matrix composite vane 12 interacts with hot gases conducted through a gas path 24 of the gas turbine engine 110 and conducts the hot gases around the airfoil assembly 10 toward a rotating wheel assembly 22 located downstream of the airfoil assembly 10 as suggested in Figs. 1 and 2. The metallic support strut 14 extends into the ceramic matrix composite vane 12 and receives force loads applied to the ceramic matrix composite vane 12 by the hot gases. The metallic inner carrier 16 is coupled with the metallic support strut 14 to transmit additional force loads to the metallic support strut 14 to block the hot gases from flowing radially inwardly beyond the airfoil assembly 10.

The metallic inner carrier 16 of each airfoil unit 18 interlocks with circumferentially adjacent airfoil units 18 to reduce the rotation of the metallic inner carriers 16 caused by aerodynamic loading. Reducing the rotation of the inner carriers 16 may reduce secondary air system leakages and improve engine performance. By each inner carrier 16 engaging the inner carrier 16 of adjacent airfoil units 18, the reaction between the airfoil units 18 acts in the opposite direction to the circumferential aerodynamic load and reduces the net loading and net deflection of each of the inner carriers 16.

The airfoil assembly 10 is adapted for use in the gas turbine engine 110 which includes a fan 112, a compressor 114, a combustor 116, and a turbine 118 as shown in Fig. 1. The fan 112 is driven by the turbine 118 and provides thrust for propelling an aircraft. The compressor 114 compresses and delivers air to the combustor 116. The combustor 116 mixes fuel with the compressed air received from the compressor 114 and ignites the fuel. The hot, high pressure products of the combustion reaction in the combustor 116 are directed into the turbine 118 to cause the turbine 118 to rotate about an axis 11 of the gas turbine engine 110 and drive the compressor 114 and the fan 112. In other embodiments, the fan 112 may be omitted and the turbine 118 drives a propeller, drive shaft, or other suitable alternative.

The turbine 118 includes a plurality of the static turbine vane rings 20 that are fixed relative to the axis 11 and a plurality of the bladed wheel assemblies 22 as suggested in Fig. 1. Each turbine vane ring 20 includes a plurality of airfoil units 18. The hot gases are conducted through the gas path 24 and interact with the bladed wheel assemblies 22 to cause the bladed wheel assemblies 22 to rotate about the axis 11. The turbine vane rings 20 are positioned to direct the gases toward the bladed wheel assemblies 22 with a desired orientation. In other embodiments, the airfoil units of the present disclosure may be incorporated into the blades of the bladed wheel assemblies 22 or in seal segments.

The ceramic matrix composite vane 12 is adapted to withstand high temperatures, but may have relatively low strength compared to the metallic support strut 14. The support strut 14 provides structural strength to the airfoil assembly 10 by receiving the force loads applied to the vane 12 and transferring them to a casing that surrounds the airfoil assembly 10. The support strut 14 and inner carrier 16 may not be capable of withstanding directly the high temperatures experienced by the vane 12.

In illustrative embodiments, the vane 12 comprises ceramic materials while the support strut 14 and inner carrier 16 comprise metallic materials. Illustratively, the vane 12 comprises ceramic matrix composite materials. In other embodiments, each of the vane 12, support strut 14, and inner carrier 16 may comprise any suitable materials including ceramics, ceramic matrix composites, metals, alloys, super alloys, etc.

The vane 12 of each airfoil assembly 10 includes an outer platform 26, an inner platform 28, and an airfoil 30 as shown in Figs. 2 and 3. The outer platform 26 defines an outer boundary of the gas path 24. The inner platform 28 is spaced apart radially from the outer platform 26 relative to the axis 11 to define an inner boundary of the gas path 24. The airfoil 30 extends radially between and interconnects the outer platform 26 and the inner platform 28. The airfoil 30 is shaped to redirect gases flowing through the gas path 24 and to shield the support strut 14 from the hot gases in the gas path 24.

The airfoil 30 is also formed to define an interior cavity 36 that extends radially into the airfoil 30 as shown in Fig. 3. Illustratively, the interior cavity 36 extends radially entirely through the outer platform 26, the inner platform 28, and the airfoil 30. In other embodiments, the interior cavity 36 extends partway into the airfoil 30 such as, for example, if airfoil 30 comprises part of a turbine blade.

In the illustrative embodiment, the outer platform 26, the inner platform 28, and the airfoil 30 of the vane 12 are integrally formed from ceramic matrix composite materials. As such, the outer platform 26, the inner platform 28, and the airfoil 30 provide a single, integral, one-piece vane 12 as shown in Fig. 3. In other embodiments, the outer platform 26, the inner platform 28, and the airfoil 30 may be formed as separate components and coupled together.

The support strut 14 extends at least partway into the airfoil 30 as shown by the broken away portion of the vane 12 in Fig. 2. The support strut 14 is engaged, directly or indirectly via load pads, seals, etc., with the vane 12 to receive force loads from the vane 12 and to transfer the force loads to a casing 42 that surrounds the airfoil assembly 10. The support strut 14 is located in the interior cavity 36 and extends radially through the outer platform 26, the inner platform 28, and the airfoil 30.

The support strut 14 extends radially between a first end 38 and a second end 40 as shown in Fig. 3. The first end 38 is located radially outward of the outer platform 26 and the second end 40 is located radially inward of the inner platform 28. The support strut 14 extends radially inward beyond the inner platform 28 to locate the inner platform 28 between the first end 38 and the second end 40 of the support strut 14 in the illustrative embodiment. The support strut 14 extends radially outward beyond the outer platform 26. The first end 38 of the support strut 14 is coupled to the casing 42 arranged around the airfoil assembly 10. The support strut 14 is cantilevered from the casing 42 in the illustrative embodiment, the second end 40 being free.

The support strut 14 is hollow in the illustrative embodiment. In some embodiments, the support strut 14 includes holes that extend through the support strut 14 to allow cooling air to pass through the hollow support strut 14 and flow into the interior cavity 36. In other embodiments, the support strut 14 is solid material between the first end 38 to the second end 40.

The inner carrier 16 is coupled with the support strut 14 to locate the inner platform 28 radially between the inner carrier 16 and the outer platform 26 as shown in Fig. 2. Illustratively, the inner carrier 16 is machined to be formed with the support strut 14 as a single piece, unitary component. In some embodiments, the inner carrier 16 is fastened, brazed, welded, bonded, interference fitted, integrally formed with, or otherwise coupled with the support strut 14. The inner carrier 16 is cantilevered from the support strut 14 in an axial fore direction and in an axial aft direction. The inner carrier 16 is cantilevered from the support strut 14 in first circumferential direction and in a second circumferential direction.

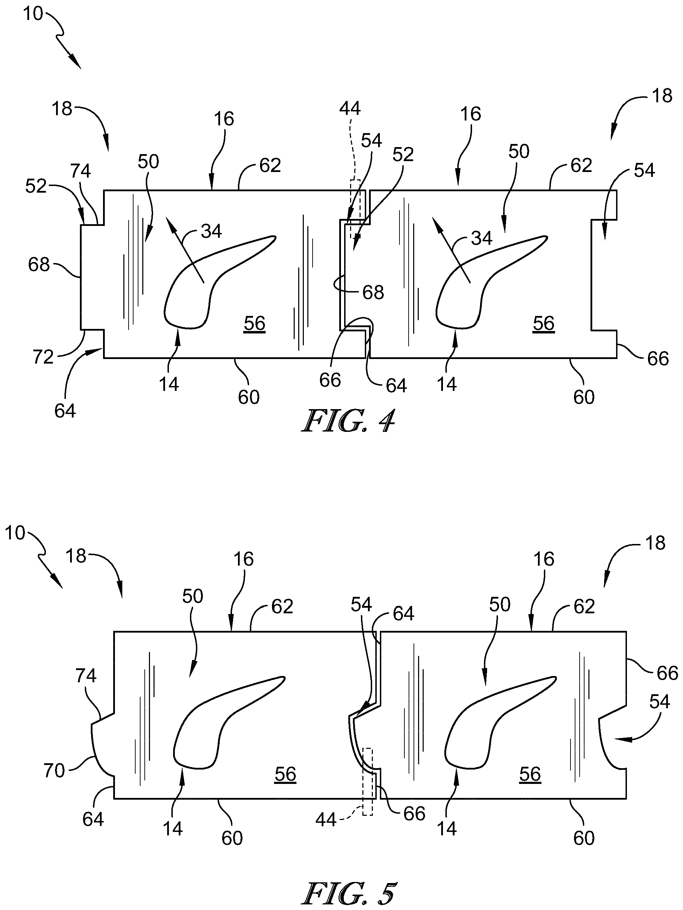

During operation of the gas turbine engine, force loads are applied to the airfoil assembly 10 as suggested in Fig. 4. The force loads may apply a torque to the airfoil assembly 10 causing the vane 12, support strut 14, and/or inner carrier 16 to twist. In other airfoil assemblies, the twisting causes gaps to form between adjacent inner carriers 16 and platforms 26, 28. The gaps may be formed circumferentially and/or radially between the components. For example, circumferential ends of the inner carriers 16 may deflect radially relative to adjacent inner carriers 16 and may rotate about an axis perpendicular to the axis 11 that extends through the airfoil 30. The gaps reduce sealing between the components such that engine performance may be degraded and additional sealing air used to compensate for the reduced sealing.

The force loads applied to the components of the airfoil units 18 are applied axially and circumferentially and urge the airfoil units 18 to twist as suggested by arrow 34 in Fig. 4. As shown in Figs. 2 and 4-8, the inner carriers 16 of the present disclosure interlock with one another such that adjacent inner carriers 16 provide a counteracting force to reduce or eliminate twisting of each of the inner carriers 16. As a result, twisting of the vanes 12 is reduced and sealing between adjacent airfoil units 18 is maintained.

The inner carrier 16 includes a body 50, a tab 52, and a void 54 as shown in Fig. 4. The body 50 is coupled with the support strut 14 and extends circumferentially relative to the axis 11. The tab 52 extends circumferentially away from a first side of the body 50 and is received in a body 50 of an inner carrier 16 of a first neighboring airfoil unit 18. The void 54 extends circumferentially into a second side of the body 50 and is shaped to receive a tab 52 of an inner carrier 16 of a second neighboring airfoil unit 18.

The body 50 includes an outer surface 56, an inner surface 58 spaced apart radially from the outer surface, a fore surface 60, an aft surface 62 spaced apart axially from the fore surface 60, a first circumferential surface 64, and a second circumferential surface 66 spaced apart circumferentially from the first circumferential surface 64 as shown in Fig. 3. The fore surface 60 and the aft surface 62 each extend radially between and interconnect the outer surface 56 and the inner surface 58. The first circumferential surface 64 and the second circumferential surface 66 each extend radially between and interconnect the outer surface 56 and the inner surface 58. The tab 52 is spaced apart axially from the aft surface 62.

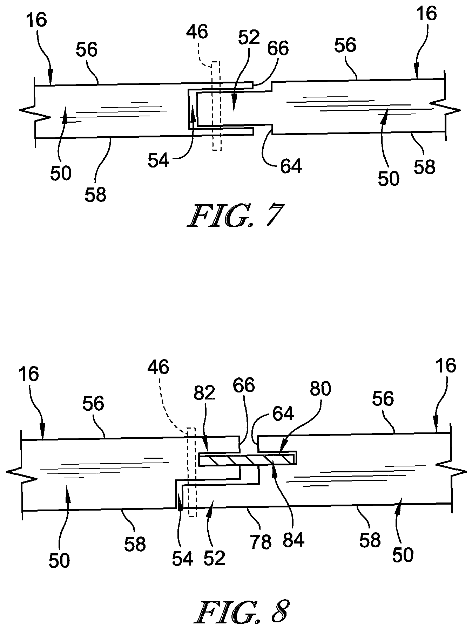

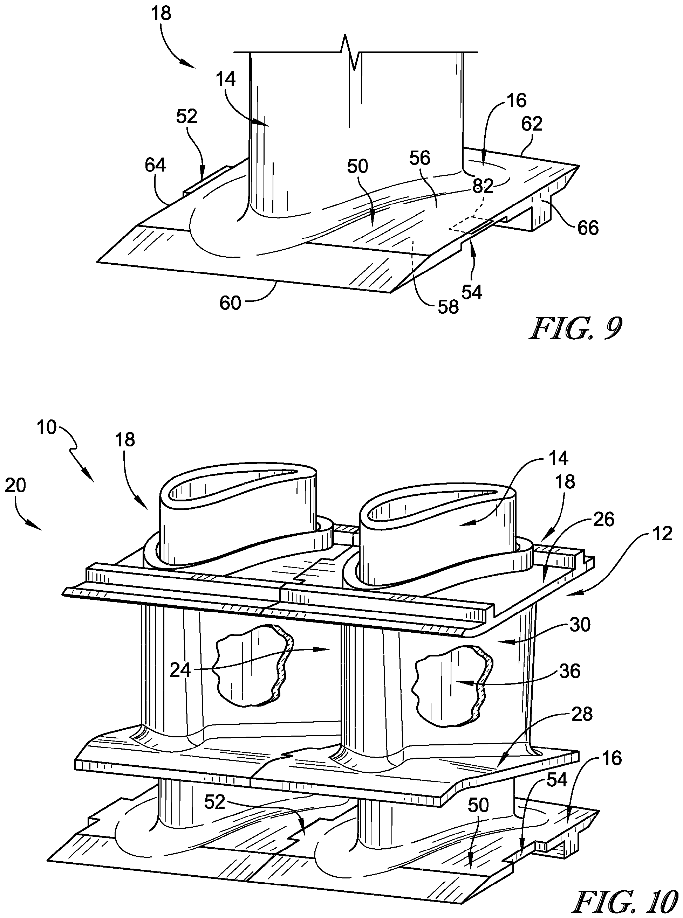

The tab 52 of each inner carrier 16 overlaps with the body 50 of a neighboring inner carrier 16. The tab 52 overlaps with the body 50 of a neighboring inner carrier 16 when viewed axially such that an imaginary axially extending pin 44 would intersect neighboring inner carriers 16 as shown in Figs. 4-6. The tab 52 overlaps with the body 50 of a neighboring inner carrier 16 when viewed radially such that an imaginary radially extending pin 46 would intersect both neighboring carriers 16 as shown in Figs. 7 and 8. In some embodiments, the tab 52 overlaps with the body 50 of a neighboring inner carrier 16 both radially and axially as suggested in Fig. 9.

Illustratively, the tab 52 extends circumferentially away from the first circumferential surface 64 as shown in Fig. 4. The tab 52 is spaced apart axially from the fore surface 60. The tab 52 is spaced apart axially from the aft surface 62. The void 54 extends circumferentially into the second circumferential surface 66 toward the tab 52. The void 54 is spaced apart axially from the fore surface 60 and the aft surface 62. The void 54 is shaped to correspond to and receive a tab 52 of a neighboring airfoil unit 18.

The tab 52 is rectangular in the embodiment shown in Fig. 4. In other embodiments, the tab 52 may be triangular, semicircular, curvilinear, uniquely shaped, or any other shape that extends positively away from the body 50. The tab 52 includes a planar surface 68 that is substantially parallel with the first circumferential surface 64, a fore surface 72, and an aft surface 74. The fore surface 72 extends circumferentially between the first circumferential surface 64 and the planar surface 68. The aft surface 74 extends circumferentially between the first circumferential surface 64 and the planar surface 68.

The tab 52 of the embodiment of Fig. 5 includes a planar surface 68 that extends at an angle circumferentially and axially away from the first circumferential surface 64 and a curvilinear surface 70 that extends between an end of the planar surface 68 and the first circumferential surface 64. The curvilinear surface is shaped like a half parabola. In some embodiments, the first circumferential surface 64 is J-shaped. The tab 52 is spaced apart axially from the fore surface 60 and the aft surface 62. The void 54 is shaped to mate with and correspond with the tab 52.

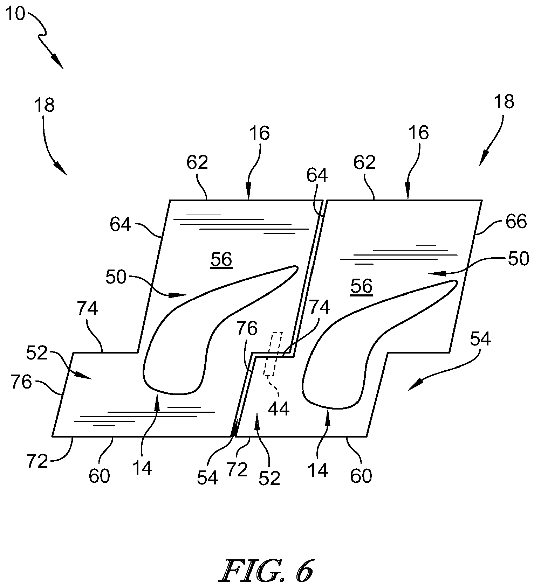

The tab 52 of the embodiment of Fig. 6 is located at the fore end of the inner carrier 16. The tab 52 includes a fore surface 72 that is flush with the fore surface 60 of the body 50 and an aft surface 74 that is spaced apart axially from the aft surface 62 of the body 50. The tab 52 further includes a side surface 76 that extends between and interconnects the fore surface 72 and the aft surface 74. The side surface 76 is angled relative to the axis 11. The void 54 extends circumferentially into the body 50 and axially into the fore surface 60 of the body partway toward the aft surface 62. The void 54 is shaped to correspond with and receive the tab 52.

In some embodiments, the tab 52 overlaps with the body 50 of a neighboring inner carrier 16 such that the imaginary radially extending pin 46 would intersect both neighboring carriers 16 as shown in Figs. 7 and 8. As shown in Fig. 7, the void 54 extends into the second circumferential surface 66 of the inner carrier 16 and is spaced apart radially from the outer surface 56 and the inner surface 58 to form cantilevered flanges on the body 50. The tab 52 extends circumferentially away from the body 50 and into the void 54 of the adjacent inner carrier 16. The tab 52 is spaced apart radially from the outer surface 56 and the inner surface 58. The force loads may urge the tab side of the inner carrier 16 to move radially outward relative to the void side of the neighboring inner carrier 16. The cantilevered flange of the body 50 blocks the tab 52 and, thus, the inner carrier 16 from moving relative to the neighboring inner carrier 16.

As shown in Fig. 8, the void 54 extends circumferentially into the second circumferential surface 66 of the body 50 and radially into the inner surface 58 toward the outer surface 56 to form a cantilevered flange in the body 50. The tab 52 extends circumferentially from the body 50 into the void 54 of the neighboring inner carrier 16. An inner surface 78 of the tab 52 is about flush with the inner surface 58 of the inner carriers 16. The tab 52 is spaced apart radially from the outer surface 56 of the body 50.

The body 50 is further formed to include a first seal slot 80 and a second seal slot 82 as shown in Fig. 8. A strip seal 84 extends into the first seal slot 80 of the inner carrier and into the second seal slot 82 of the neighboring inner carrier 16 to block gases from flowing radially between the neighboring airfoil units 18. The first seal slot 80 extends circumferentially into the first circumferential surface 64 of the body 50. The first seal slot 80 is spaced apart radially from the tab 52 in the illustrative embodiment. The second seal slot 82 extends circumferentially into the second circumferential surface 66 of the body 50. The second seal slot 82 is spaced apart radially from the void 54 and extends into the cantilevered flange of the body 50.

In some embodiments, the tab 52 overlaps with the body 50 of a neighboring inner carrier 16 both radially and axially as suggested in Fig. 9. The inner carriers 16 of the embodiment of Fig. 9 include a tab 52 combining the features of the embodiments of Figs. 4 and 8. Any combination of embodiments within the scope of the disclosure is possible in other embodiments.

In some embodiments, the outer platform 26 and/or the inner platform 28 of the vane 12 interlock according to the features of the present disclosure as suggested in Fig. 10. The outer platform 26 and/or the inner platform 28 may interlock in addition to or instead of the interlocking inner carriers 16.

The present disclosure provides features to reduce the rotation of ceramic matrix composite airfoil units 18 caused by aerodynamic loading. The reduction in rotation may be leveraged to reduce secondary air system leakages and improve engine performance.

The load from high pressure stage two nozzel guide vanes 12 is transmitted outboard to the high-pressure turbine casing via the support strut 14. The ceramic matrix composite airfoil 30 and/or support structure 14 is cantilvered from a radially outboard attachement 42 in the illustrastive embodiment. In some embodiments, the strut 14 is used to transmit the axial load from the inter-stage seal to the high-pressure turbine casing 42. In addition, the strut 14 may be used to support the ceramic matrix composite airfoil 30. The inter-stage seal induces an axial load onto the strut 14, while the airfoil 30 induces an axial component in addition to a circumferential component due to the hot gases applying force load to the airfoil 30.

As a result of the circumferential loading, the structure may be urged to rotate. This may be pronounced if the metallic inner platform carrier 16 structure is segmented, which may occur to balance thermal growth mismatches if the strut 14 is rigidly connected to the high-pressure turbine casing 42. Such rotation could induce relative movement and increase leakages through seals at the inner end of the structure. Ceramic matrix composite materials, such as the ceramic matrix composite airfoil 30, are intended to reduce cooling flow requirements, but if the leakages are greater than an equivalent metallic design then this rotation may erode the fuel burn benefit of ceramic matrix composite parts.

The present disclosure introduces a mechanical linkage to reduce rotation of the structure. By engaging the adjacent part, the reaction acts in the opposite direction to the circumferential aerodynamic load and reduces the net loading and net deflection of every part.

The mechanical linkage may be sensitive to a number of criteria. For example, the load path created when adjacent parts engage. i.e. face contact on the full axial extent of the feature or just on the protruding circumferential faces. The shape and size of these features may be optimized to reduce overall movement, but avoid over-stressing the components, see Fig. 5 for example. The orientation of contacting faces may be optimized for the best compromise in reducing relative movements that may be detrimental to leakage, for example, engagement in either radial or axial orientation or in combination. Orientation of the aerodynamic load vector i.e. the ratio of circumferential load to air/inter-stage seal axial load may be considered. Sealing of the wedge faces may be considered, for example, splitting the seal into a number of isolated pieces may be detrimental to the leakage. Even still, the pressure ratio driving the seal may increase towards the trailing edge, therefore an optimum split location may be defined. The seal engagement may be considered, for example, a one-piece wider than typical strip seal 84 may undercut the engagement feature, see Fig. 8 for example

The linkage features may be applied to any ceramic matrix composite vane, blade, airfoil, seal segment, or other structure with loads that may result in twisting. Linkage features may be applied to the ceramic matrix composite platforms in addition to the linkage features in the inner carrier or instead of the linkage features in the inner carrier. The linkage features could be pre-formed as ceramic preforms of approximately the final size or pre-formed larger than desired and then machined to size after the infiltration process.

While the disclosure has been illustrated and described in detail in the foregoing drawings and description, the same is to be considered as exemplary and not restrictive in character, it being understood that only illustrative embodiments thereof have been shown and described and that all changes and modifications that come within the scope of the following claims are desired to be protected.

## Claims

1. An airfoil assembly (10) for a gas turbine engine (110), the airfoil assembly (10) comprising:
an airfoil (30);
a support strut (14) that extends radially into the airfoil (30) relative to an axis (11); and
an inner carrier (16) coupled with the support strut (14) to locate the inner carrier (16) radially between the airfoil (30) and the axis (11), the inner carrier (16) including a body (50), a tab (52) that extends circumferentially away from the body (50), and a void (54) that extends circumferentially into the body (50).

2. The airfoil assembly (10) of claim 1, wherein the body (50) extends axially and circumferentially relative to the axis (11).

3. The airfoil assembly (10) of claim 1 or 2, wherein the body (50) has an outer surface (56) and an inner surface (58) spaced apart radially form the outer surface (56) and the tab (52) is spaced apart radially from at least one of the outer surface (56) and the inner surface (58).

4. The airfoil assembly (10) of claim 3, wherein the tab (52) is spaced apart radially from both the outer surface (56) and the inner surface (58).

5. The airfoil assembly (10) of claim 1 or 2, wherein the body (50) has an outer surface (56) and an inner surface (58) spaced apart radially from the outer surface (56) and the tab (52) is flush radially with at least one of the outer surface (56) and the inner surface (58).

6. The airfoil assembly (10) of claim 5, wherein the tab (52) is flush with one of the outer surface (56) and the inner surface (58) and spaced apart radially from the other of the outer surface (56) and the inner surface (58).

7. The airfoil assembly (10) of any one of claims 1 to 6, wherein the body (50) is formed to further include a seal slot (80, 82) that extends circumferentially into the body (50).

8. The airfoil assembly (10) of any one of claims 1 to 7, wherein the body (50) includes a fore surface (60) and an aft surface (62) spaced apart axially from the fore surface (60), a surface (72) of the tab (52) is flush with the fore surface (60), and the void (54) extends axially into the fore surface (60) partway into the body (50).

9. The airfoil assembly (10) of any one of claims 1 to 8, wherein the tab (52) includes a curvilinear surface.

10. The airfoil assembly (10) of any one of claims 1 to 9, further comprising a vane (12) adapted to interact with hot gases flowing around the airfoil assembly (10) during use of the airfoil assembly (10).

11. The airfoil assembly (10) of claim 10, wherein the vane (12) comprises an outer platform (26) that defines an outer boundary of a gas path (24) and an inner platform (28) that defines an inner boundary of the gas path (24).

12. The airfoil assembly (10) of claim 11, wherein the airfoil (30) extends radially between and interconnects the outer platform (26) and the inner platform (28) and is formed to define an interior cavity (36) that extends radially through the airfoil (30).

13. The airfoil assembly (10) of claim 12, wherein the support strut (14) is located in the interior cavity (36) formed in the airfoil (30) and is configured to receive force loads applied to the vane (12) by the hot gases during use of the airfoil assembly (10).

14. The airfoil assembly (10) of any one of claims 10 to 13, wherein the vane (12) is a ceramic matrix composite vane.

15. A gas turbine engine (110) comprising the airfoil assembly (10) of any one of claims 1 to 14.
